(19) Europäisches Patentamt / European Patent Office / Office européen des brevets

(11) **EP 2 905 441 B1**

(12) **EUROPEAN PATENT SPECIFICATION**

(45) Date of publication and mention of the grant of the patent:
**15.11.2017 Bulletin 2017/46**

(21) Application number: **12884320.8**

(22) Date of filing: **10.09.2012**

(51) Int Cl.:
*F01N 3/08* *(2006.01)*        *F01N 3/20* *(2006.01)*

(86) International application number:
**PCT/JP2012/073065**

(87) International publication number:
**WO 2014/038084 (13.03.2014 Gazette 2014/11)**

(54) **CONTROL DEVICE FOR ADDITIVE SUPPLY SYSTEMS**

STEUERUNGSVORRICHTUNG FÜR ZUSATZSTOFFZUFUHRSYSTEME

DISPOSITIF DE COMMANDE POUR SYSTÈMES D'ALIMENTATION EN ADDITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.08.2015 Bulletin 2015/33**

(73) Proprietor: **TOYOTA JIDOSHA KABUSHIKI KAISHA**
**Toyota-shi, Aichi-ken, 471-8571 (JP)**

(72) Inventor: **OTA, Hirohiko**
**Toyota-shi**
**Aichi 471-8571 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**WO-A1-2009/037340        WO-A1-2012/063530**
**DE-A1-102010 016 654      JP-A- 2008 527 228**
**JP-A- 2010 285 950        JP-A- 2012 127 214**

**Description**

TECHNICAL FIELD

The present invention relates to a control device for an additive supply system that supplies an additive such as urea aqueous solution in a tank by injection through an addition valve to a catalyst provided in an exhaust passage of an internal combustion engine.

BACKGROUND ART

A device described for example in Patent Document 1 is known as a control device for an additive supply system of the aforementioned type. In the device described in JP 2008-101564 A, an additive in a liquid form is supplied by injection from the upstream side of a selective reduction catalyst provided in an exhaust passage to the catalyst through an addition valve. As a result, nitrogen oxide (NOx) in exhaust gas is reduced and cleaned up.

In this additive supply system, the additive in the piping may be frozen while the engine is in a stopped state. This can damage the piping. In this regard, in the device described in JP 2008-101564 A, a pump is rotated in reverse to execute retrieval control of drawing the additive in the piping back into the tank when the engine is stopped. This reduces damage on the pipe due to freezing of the additive.

From DE 10 2010 016 654 A1, an exhaust gas purification system for use in internal combustion engine is known. The system has a pump, which pumps stored urea solution in a tank. A discharging pipe is attached to a discharging side of the pump. An admixture valve adds the urea solution into an exhaust gas pipe of an internal combustion engine. A control device implements a recycling operation for recycling the urea solution in the discharging pipe to the tank such that steam in the tank is transferred to the discharging pipe through a transfer pipe by suction force of the pump, which implements back rotation movement during the recycling operation.

SUMMARY OF THE INVENTION

Problems that the Invention is to Solve

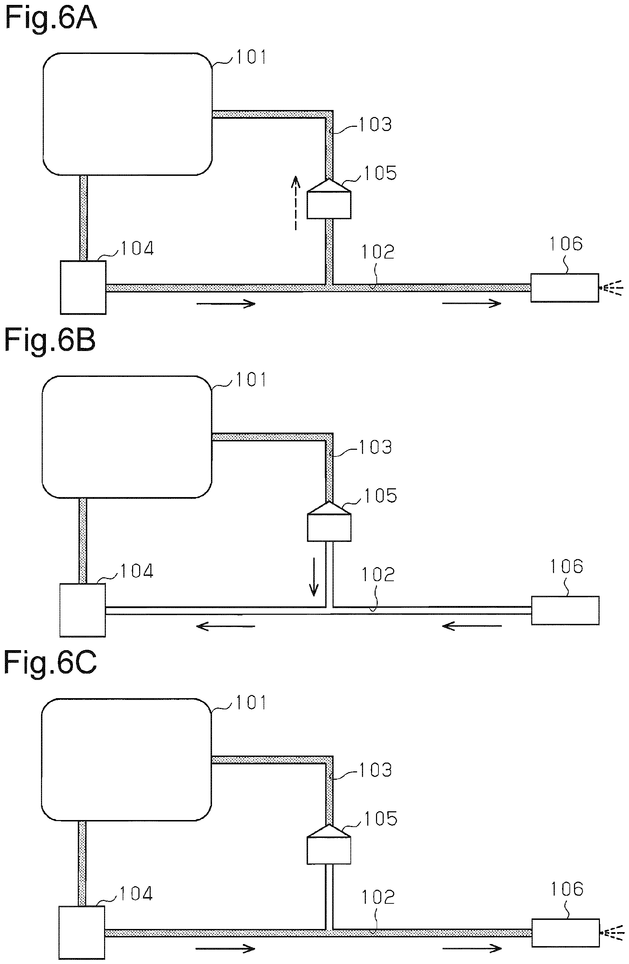

As shown in Fig. 6A, a possible additive supply system includes a main passage 102, through which additive in a tank 101 is supplied to an addition valve 106, a return passage 103 branching off the main passage 102 to be connected to the tank 101, and a check valve 105 provided in the return passage 103. The check valve 105 prevents flow of the additive from the return passage 103 into the main passage 102 and opens when the pressure in the main passage 102 is higher than or equal to a predetermined valve opening pressure. In this additive supply system, if the pressure in the main passage 102 increases and becomes the predetermined valve opening pressure, some of the additive is returned into the tank 101 through the check valve 105. This maintains the pressure in the main passage 102 at a predetermined level.

Meanwhile, the following troublesome issue can occur if filling control of filling the main passage 102 with the additive is executed after execution of the aforementioned retrieval control.

As shown in Fig. 6B, if the retrieval control is executed and the pump 104 is driven to rotate in reverse, the additive having existed in a part of the main passage 102 between the pump 104 and the addition valve 106 and in a part of the return passage 103 closer to the main passage 102 than the check valve 105 is drawn back toward the tank 101. These parts become filled with air accordingly. In Fig. 6, a part of the main passage 102 and a part of the return passage 103 full of the additive is hatched, whereas a part of the main passage 102 and a part of the return passage 103 full of air are blank.

If the filling control is executed in this state the pump 104 is driven to rotate forward and the addition valve 106 is opened. In response, the additive discharged from the pump 104 first reaches a part of the main passage 102 where the return passage 103 braches off the main passage 102. Thus, the check valve 105, which is set to be opened under a relatively high pressure, is not opened. As shown in Fig. 6C, while air remains in the part of the return passage 103 closer to the main passage 102 than the check valve 105, a part of the main passage 102 closer to the addition valve 106 than the aforementioned branching point is filled with the additive. If the additive is supplied by injection through the addition valve 106 thereafter, air remaining in the part of the return passage 103 closer to the main passage 102 than the check valve 105 is mixed into the main passage 102. This causes the pressure in the main passage 102 to fluctuate easily and to fluctuate the rotation of the pump 104, thereby hindering stable injection of the additive. As a result, the additive adheres to an injection hole or its vicinity of the addition valve 106 to form a deposit thereof.

It is an object of the present invention to provide a control device for an additive supply system capable of reliably suppressing unstable injection of an additive from occurring after refilling of the additive.

Means for Solving the Problems

Means for achieving the above objective and advantages thereof will now be discussed.

To achieve the foregoing objective, and in accordance with one aspect of the present invention as set forth in claim 1, a control device for an additive supply system is provided. The additive supply system includes a tank that stores an additive in a liquid form, an addition valve, a main passage, a pump, a return passage, and a check valve. Through the addition valve, the additive in the tank is supplied by injection to a catalyst provided in an exhaust passage of an internal combustion engine. Through the main passage, the additive in the tank is supplied to the addition valve. The pump is provided in the main passage and feeds the additive under pressure. The return passage branches off the main passage to be connected to the tank. The check valve is provided in the return passage and prevents flow of the additive from the return passage into the main passage, and the check valve is opened if a pressure in the main passage becomes higher than or equal to a predetermined valve opening pressure. The control device is configured to be capable of executing retrieval control of drawing the additive in the main passage back into the tank by rotating the pump in reverse. When executing filling control of filling the main passage with the additive after execution of the retrieval control, the control device rotates the pump forward while keeping the addition valve closed, and then opens the addition valve and rotates the pump forward.

In this configuration, when the filling control is executed after execution of the retrieval control, the pump is rotated forward first while the addition valve is kept closed. The closed addition valve causes the additive discharged from the pump to flow into the return passage. This increases the pressure in the return passage to open the check valve. As a result, air remaining in the return passage is pushed out through the check valve. When the addition valve is opened thereafter, air remaining in the main passage is pushed out through the addition valve. This reliably restrains air from remaining in the return passage and the main passage, thereby reliably suppressing unstable injection of the additive from occurring after refilling of the additive.

In this case, when executing the filling control, the control device preferably drives the pump to rotate forward while keeping the addition valve closed for a predetermined period set in advance. The predetermined period is preferably set to be longer than or equal to the shortest period required for filling of the return passage with the additive to complete after the filling control is started.

According to this aspect, the addition valve is opened after the return passage becomes full of the additive, specifically after substantially all air remaining in the return passage is pushed out through the check valve. This reliably restrains air from remaining in the return passage after refilling of the additive.

When the control device executes the filling control, the lower the range within which the pressure in the main passage changes, the longer becomes the period in which the control device drives the pump to rotate forward while the addition valve is kept open after the pump rotates forward while the addition valve is kept closed.

During execution of the filling control, air of a larger amount existing in the main passage immediately after the addition valve is opened causes the pressure in the main passage to change within a lower pressure range than when small amount of air exists in the main passage. Thus, if the pressure in the main passage changes within a lower pressure range than expected in the control in which the reference period is fixed, the reference period may elapse and the filling control may be finished while part of air in the main passage remains without being pushed out. In this case, it may be impossible to start injection of the additive in a desired manner.

In this regard, in the aforementioned aspect, timing of finishing the filling control is set variably in response to how the pressure in the main passage actually changes. Thus, even if the pressure in the main passage changes within a lower pressure range than expected, it is possible to prevent the filling control from being finished as a result of elapse of the reference period with part of air in the main passage remaining without being pushed out. This reliably restrains air from remaining in the main passage after refilling of the additive.

In this case, when executing the filling control, the control device preferably drives the pump to rotate forward while keeping the addition valve open until a relationship represented by the following expression is established. In the below expression, t represents the period elapsed after the addition valve is opened, M represents the mass of the additive filling the entire main passage, S represents the cross-sectional area of the main passage, Spd represents the filling speed of the additive, and P represents the pressure in the main passage.

$$\frac{1}{\log(t)} \cdot \int_0^t P dt \geq \frac{1}{S} \cdot M \cdot Spd$$

BRIEF DESCRIPTION OF THE DRAWINGS

Fig. 1 is a schematic diagram showing the configuration of an additive supply system and a control device for the system according to a first embodiment of the present invention;

Fig. 2 is a flowchart showing a procedure for filling control according to the first embodiment;

Fig. 3A is a schematic diagram showing the state of additive and air in the main passage and the return passage according to the first embodiment during execution of retrieval control;

Fig. 3B is a schematic diagram showing a state during execution of the filling control with the addition valve closed;

Fig. 4A is a schematic diagram showing the state of additive and air in the main passage and the return passage of the first embodiment during execution of the filling control with the addition valve open;

Fig. 4B is a schematic diagram showing a state during execution of normal injection;

Fig. 5 is a flowchart showing a procedure for filling control according to a second embodiment;

Fig. 6A is a schematic diagram showing the state of additive and air in a main passage and a return passage according to a conventional art during execution of normal injection;

Fig. 6B is a schematic diagram showing a state during execution of retrieval control; and

Fig. 6C is a schematic diagram showing a state during execution of filling control.

MODES FOR CARRYING OUT THE INVENTION

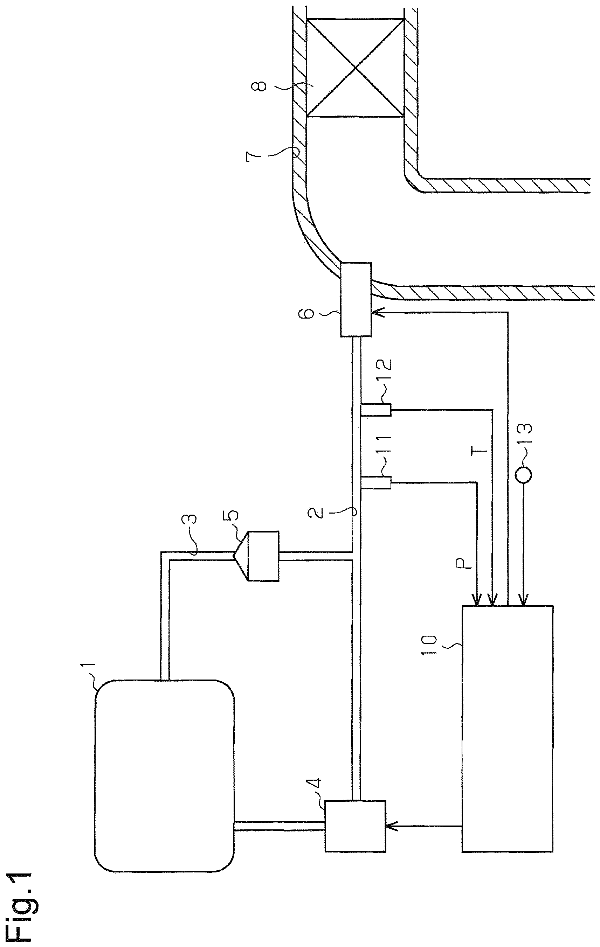

A control device for an additive supply system according to a first embodiment of the present invention will be described with reference to Figs. 1 to 5. The control device is applied to an exhaust purifying device for a diesel engine.

As shown in Fig. 1, a selective reduction catalyst (hereinafter called a catalyst 8) is provided in an exhaust passage 7 of the diesel engine. An additive supply system is provided that supplies liquid additive in a tank 1 by injection through an addition valve 6 to the catalyst 8 from the upstream side of the catalyst 8. In the present embodiment, urea aqueous solution is used as the additive.

The configuration of the additive supply system will be described next.

The tank 1 and the addition valve 6 are connected through a main passage 2. An electric pump 4 that feeds the additive under pressure is located in the main passage 2. The pump 4 has an output shaft, of which the rotational direction is changed, so that the direction in which the additive is discharged from the pump 4 is changed. Specifically, while the output shaft of the pump 4 is rotated forward, the additive in the tank 1 is discharged toward the addition valve 6. While the output shaft is rotated in reverse, the additive existing in a part closer to the addition valve 6 than the pump 4 is discharged toward the tank 1.

A return passage 3 branches off a part of the main passage 2 closer to the addition valve 6 than the pump 4. The return passage 3 has an end connected to the tank 1. A check valve 5 is located in the return passage 3. The check valve 5 prevents flow of the additive from the return passage 3 into the main passage 2 and is opened if the pressure in the main passage 2 is higher than or equal to a predetermined valve opening pressure. The check valve 5 maintains the pressure in the main passage 2 to be lower than or equal to the predetermined valve opening pressure.

An electronic control device 10 functioning as the control device is responsible for various controls of the diesel engine including driving control of the pump 4 and injection control of the additive through the addition valve 6. The electronic control device 10 includes a central processing unit (CPU), which performs calculations relating to the various controls, a read-only memory (ROM), in which programs, data or the like for these controls are stored, and a random access memory (RAM), which temporarily stores results of the calculations, for example. The electronic control device 10 reads signals detected by various sensors, performs various calculations, and controls the pump 4, the addition valve 6 and others in a centralized manner based on results of these calculations.

The various sensors include known sensors used to determine the operating state of the engine and an ignition switch 13. These sensors include a pressure sensor 11, which detects a pressure P of the additive in the main passage 2, and a temperature sensor 12, which detects a temperature T of the additive in the main passage 2. The pressure sensor 11 and the temperature sensor 12 are provided in the main passage 2 on a side closer to the addition valve 6 than the part of the main passage 2 where the return passage 3 branches off.

As described above, the additive in the piping that forms the main passage 2 and the return passage 3 may be frozen while the engine is in a stopped state. This can damage the piping.

In the present embodiment, the pump 4 is rotated in reverse to execute retrieval control of drawing the additive in the main passage 2 back into the tank 1 when the engine is stopped, thereby reducing damage on the piping due to freezing of the additive.

If the engine is restarted after execution of the retrieval control to supply the additive by injection, filling control of filling the main passage 2 with the additive is executed before the injection of the additive. When the filling control is executed, the pump 4 is rotated forward while the addition valve 6 is kept closed. Then, the addition valve 6 is opened and the pump 4 is rotated forward. This restrains air from remaining in the return passage 3 and the main passage 2, thereby suppressing unstable injection of the additive after refilling of the additive.

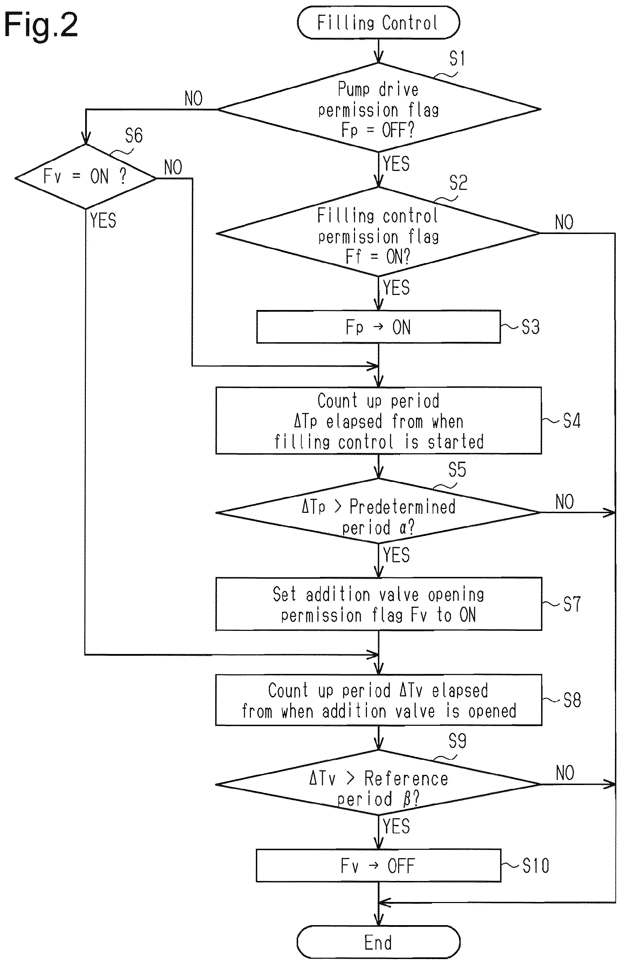

A procedure for the filling control according to the first embodiment is described below by referring to the flowchart of Fig. 2. The electronic control device 10 repeats a series of processes shown in Fig. 2 at predetermined intervals (at intervals of several tens of milliseconds, for example) while the engine operates.

As shown in Fig. 2, in this series of processes, it is determined first whether a pump drive permission flag Fp is at OFF (step S1). The flag Fp is initially set at OFF.

If the pump drive permission flag Fp is determined to be at OFF in step S1, the procedure proceeds to step S2 to determine whether a filling control permission flag Ff is at ON (step S2). The flag Ff is initially set at OFF. The flag Ff is set to ON if the temperature T of the additive is determined to be higher than a predetermined temperature that indicates that the additive is not frozen.

If the filling control permission flag Ff is not determined to be at ON (step S2: NO), it is determined that a condition for executing the filling control is not satisfied. In this case, the series of processes is temporarily suspended.

If the filling control permission flag Ff is determined to be at ON (step S2: YES), it is determined that the condition for executing the filling control is satisfied. Then, the procedure proceeds to step S3 to set the pump drive permission flag Fp to ON. This drives the pump 4 to rotate forward. The rotation speed of the pump 4 is set at a level that causes the pressure of the additive discharged from the pump 4 to be higher than or equal to than the valve opening pressure of the check valve 5.

Next, the procedure proceeds to step S4 to count up a period $\Delta tp$ elapsed from when the filling control was started. Next, the procedure proceeds to step S5 to determine whether the elapsed period $\Delta tp$ is longer than a predetermined period $\alpha$. This predetermined period $\alpha$ is set to be longer than or equal to the shortest period required for filling of the return passage 3 with the additive to complete after the filling control is started with the rotation speed of the pump 4 set at the aforementioned level. The predetermined period $\alpha$ is set in advance based on the volume of the return passage 3.

If the elapsed period $\Delta tp$ is determined to be shorter than or equal to the predetermined period $\alpha$ in step S5 (step S5: NO), it is determined that air still remains in the return passage 3. In this case, the series of processes is temporarily suspended.

If the pump drive permission flag Fp is determined to be at ON in step S1 (step S1: NO), the procedure proceeds to step S6 to determine whether an addition valve opening permission flag Fv is at ON. The flag Fv is initially set at OFF.

If the addition valve opening permission flag Fv is determined to be at OFF in step S6 (step S6: NO), the procedure proceeds to step S4 to count up the period $\Delta tp$ elapsed from when the filling control was started. Next, the procedure proceeds to step S5. If the elapsed period $\Delta tp$ is determined to be longer than the predetermined period $\alpha$ in step S5 (step S5: YES), the procedure proceeds to step S7 to set the addition valve opening permission flag Fv to ON. As a result, the addition valve 6 is opened.

Next, the procedure proceeds to step S8 to count up a period $\Delta tv$ elapsed from when the addition valve 6 was opened. Next, the procedure proceeds to step S9 to determine whether the elapsed period $\Delta tv$ is longer than a reference period $\beta$. This reference period $\beta$ is set to be longer than or equal to the shortest period required for filling of the main passage 2 with the additive to complete after the addition valve 6 is opened with the rotation speed of the pump 4 set at the aforementioned level. The reference period $\beta$ is set in advance based on the volume of the main passage 2.

If the elapsed period $\Delta tv$ is determined to be shorter than or equal to the reference period $\beta$ in step S9 (step S9: NO), it is determined that air still remains in the main passage 2. In this case, the series of processes is temporarily suspended.

If the pump drive permission flag Fp is determined to be at ON in step S1 (step S1: NO) and if the addition valve opening permission flag Fv is determined to be at ON in step S6 (step S6: YES), the procedure proceeds to step S8 to count up the period $\Delta tv$ elapsed from when the addition valve 6 was opened. Next, the procedure proceeds to step S9. If the elapsed period $\Delta tv$ is determined to be longer than the reference period $\beta$ in step S9 (step S9: YES), the procedure proceeds to step S10 to set the addition valve opening permission flag Fv to OFF. This closes the addition valve 6 to finish the series of processes once.

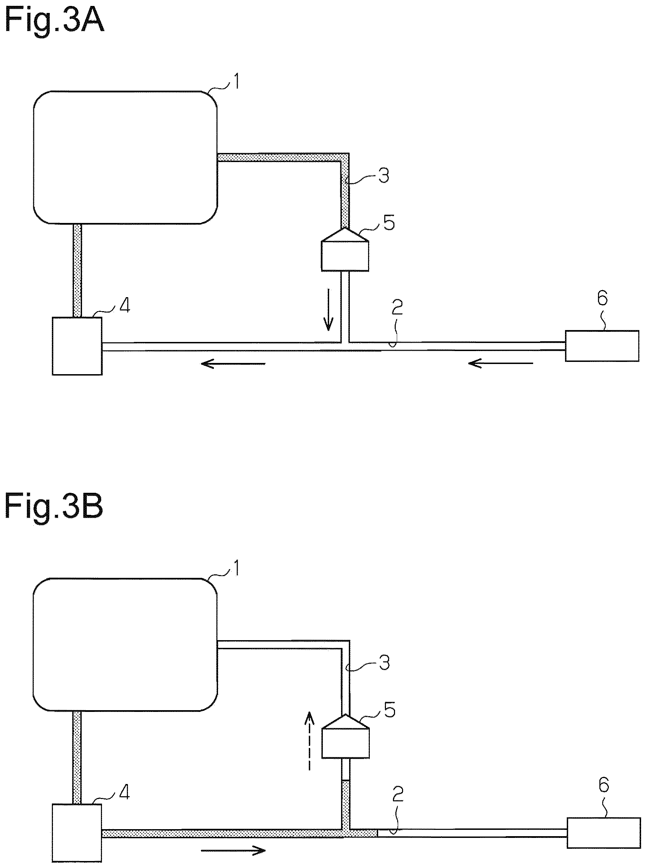

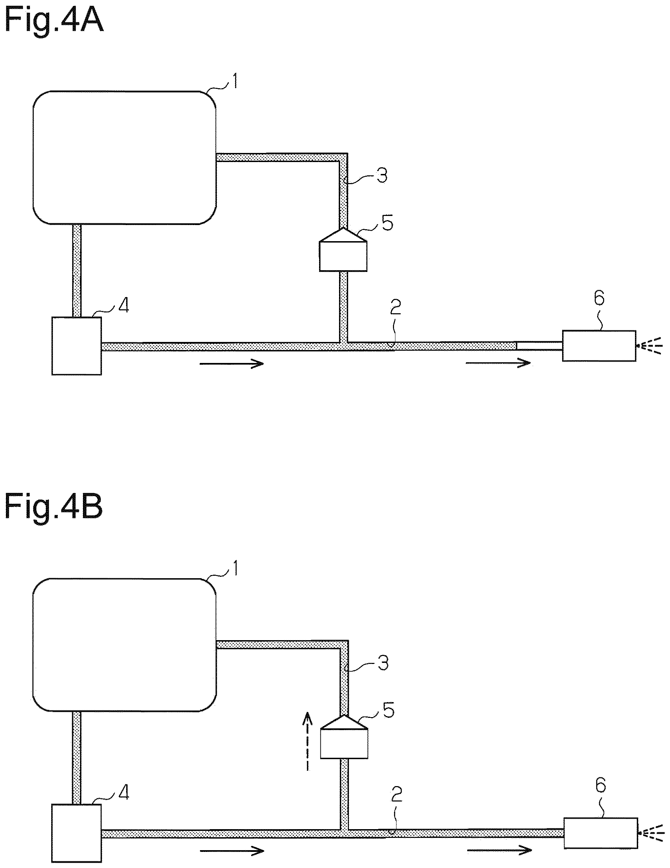

Operation of the present embodiment will now be described by referring to Figs. 3 and 4. In Figs. 3 and 4, a part of the main passage 2 and a part of the return passage 3 full of the additive are hatched, whereas a part of the main passage 2 and a part of the return passage 3 full of air are blank.

The retrieval control is executed when the ignition switch 13 is turned off to stop the engine. This drives the pump 4 to rotate in reverse to draw the additive in the main passage 2 back into the tank 1, as shown in Fig. 3A. As a result, the additive having existed in a part of the main passage 2 between the pump 4 and the addition valve 6 and in a part of the return passage 3 closer to the main passage 2 than the check valve 5 is drawn back toward the tank 1, so that these parts become full of air.

Next, the ignition switch 13 is turned on to restart the engine. If the additive is determined not to be frozen, the filling control is executed accordingly. In this case, as shown in Fig. 3B, the pump 4 is driven to rotate forward first with the addition valve 6 kept closed for the predetermined period $\alpha$. At this time, the addition valve 6 is closed, so that the additive discharged from the pump 4 flows into the return passage 3. This increases the pressure in the return passage 3 to open the check valve 5. As a result, air remaining in the return passage 3 is pushed out toward the tank 1 through the check valve 5.

After the air in the return passage 3 is pushed out in this way and the return passage 3 becomes full of the additive, the addition valve 6 is opened and the pump 4 is driven to rotate forward for the reference period β. This fills a part of the main passage 2 with the additive closer to the addition valve 6 than the part of the main passage 2 where the return passage 3 branches off as shown in Fig. 4A, thereby pushing out air remaining in the main passage 2 toward the exhaust passage 7 through the addition valve 6.

Thus, executing the filling control of the present embodiment reliably restrains air from remaining in the return passage 3 and the main passage 2.

As shown in Fig. 4B, air remaining in the main passage 2 and the return passage 3 is reduced when the additive is supplied by injection through the addition valve 6 thereafter. This suppresses fluctuation of the pressure in the main passage 2, so that fluctuation of the rotation of the pump 4 is reliably suppressed.

The control device for an additive supply system of the present embodiment achieves the following advantages (1) to (3).

(1) When executing the filling control of filling the main passage 2 with the additive after execution of the retrieval control, the electronic control device 10 rotates the pump 4 forward while keeping the addition valve 6 open. Then, the electronic control device 10 opens the addition valve 6 and rotates the pump 4 forward. In this control, air remaining in the return passage 3 is pushed out through the check valve 5 while the addition valve 6 is closed. In response to opening of the addition valve 6 thereafter, air remaining in the main passage 2 is pushed out through the addition valve 6. This can reliably restrain air from remaining in the return passage 3 and the main passage 2, thereby reliably suppressing unstable injection of the additive to occur after refilling of the additive.

(2) When executing the filling control, the electronic control device 10 drives the pump 4 to rotate forward while keeping the addition valve 6 closed for the predetermined period α set in advance. The predetermined period α is set to be longer than or equal to the shortest period required for filling of the return passage 3 with the additive to complete after the filling control is started. In this control, a period when the pump 4 is driven to rotate forward while the addition valve 6 is kept closed can be controlled easily during execution of the filling control. In the aforementioned control, the addition valve 6 is opened after the return passage 3 becomes full of the additive, specifically after substantially all air remaining in the return passage 3 is pushed out through the check valve 5. This reliably restrains air from remaining in the return passage 3 after refilling of the additive.

(3) When executing the filling control, the electronic control device 10 drives the pump 4 to rotate forward while keeping the addition valve 6 open for the reference period β set in advance. The reference period β is set to be longer than or equal to the shortest period required for filling of the main passage 2 with the additive to complete after the addition valve 6 is opened. In this control, a period when the pump 4 is driven to rotate forward while the addition valve 6 is kept open can be controlled easily during execution of the filling control. In the aforementioned control, the additive is supplied by injection through the addition valve 6 after substantially all air remaining in the main passage 2 is pushed out through the addition valve 6. This reliably restrains air from remaining in the main passage 2 after refilling of the additive.

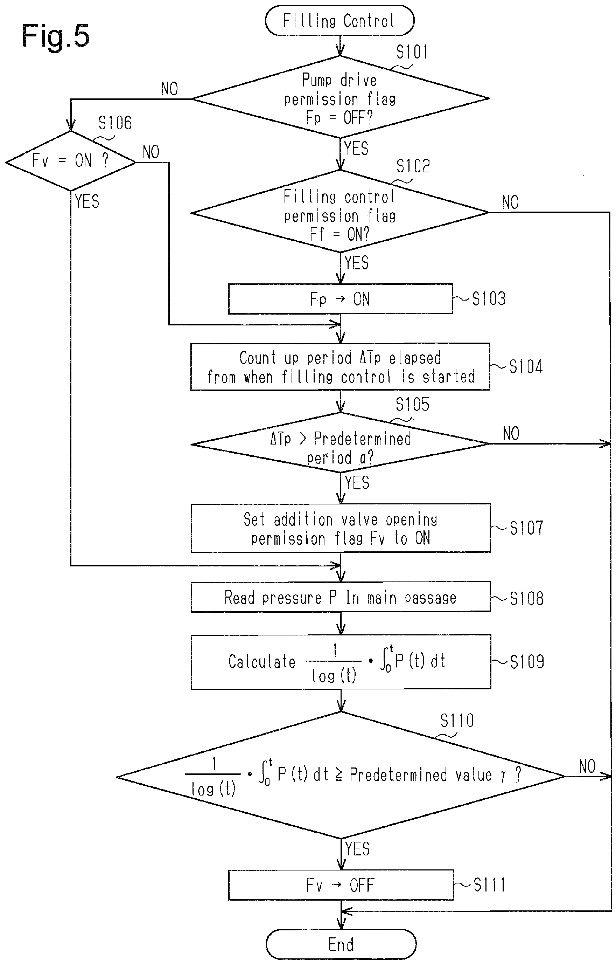

A second embodiment of the present invention will now be described with reference to Fig. 5.

During execution of the filling control, air of a larger amount existing in the main passage 2 immediately after the addition valve 6 is opened causes the pressure P in the main passage 2 to change within a lower pressure range than when a smaller amount of air exists in the main passage 2. Thus, if the reference period β is fixed like in the control of the first embodiment and if the pressure in the main passage 2 changes within a lower pressure range than expected, the reference period β may elapse and the filling control may be finished while part of air in the main passage 2 remains without being pushed out. In this case, it may be impossible to start injection of the additive in a desirable manner.

When executing the filling control, the electronic control device 10 of the present embodiment operates such that the lower the range within which the pressure in the main passage 2 changes after the addition valve 6 is opened, the longer the period in which the pump 4 is driven to rotate forward with the addition valve 6 kept open.

More specifically, the pump 4 is driven to rotate forward while the addition valve 6 is kept open until the relationship shown in the following expression (1) is established after the addition valve 6 is opened.

$$\frac{1}{\log(t)} \cdot \int_0^t P dt \geq \frac{1}{s} \cdot M \cdot Spd$$

(Expression 1)

The expression (1) will be explained below.

The expression (3) is obtained by entering parameters relating to the additive flowing in the main passage 2 into the equation of motion shown in the expression (2).

$$f = m \cdot a$$

(Expression 2)

$$S \cdot P = V \cdot \epsilon \cdot \frac{Spd}{t}$$

(Expression 3)

The sign V represents the volume of the main passage 2, and the sign ε represents the specific gravity of the additive. Further, the sign Spd represents the filling speed of the additive, and the sign t represents the period elapsed after the addition valve 6 is opened. The expression (3) is time-integrated to obtain the following expression (4).

$$S \cdot \int_0^t P dt = M \cdot Spd \cdot \int_0^t \frac{1}{t} dt$$

(Expression 4)

The product of the volume V of the main passage 2 and the specific gravity ε of the additive means a mass M of this additive filling the entire main passage 2. Both sides of the expression (4) are divided by S to obtain the following expression (5).

$$\int_0^t P dt = \frac{1}{S} \cdot M \cdot Spd \cdot \log(t)$$

(Expression 5)

The parameters on the right side of the expression (5) except log (t) can be considered as fixed values. Defining the product of these parameters as γ, both sides of the expression (5) are divided by log(t), thereby obtaining the following expression (6).

$$\frac{1}{\log(t)} \cdot \int_0^t P dt = \gamma$$

(Expression 6)

The value on the left side of the expression (6) is derived through the electronic control device 10 in each predetermined period from when the addition valve 6 is opened during execution of the filling control. The relationship shown in the expression (6) is established with "t" that indicates a period required for the main passage 2 to become full of the additive. Thus, based on the value on the left side being greater than or equal to γ, it can be determined that the main passage 2 is entirely filled with the additive, specifically that substantially all air remaining in the main passage 2 has been pushed out to the exhaust passage 7 through the addition valve 6.

A procedure for the filling control according to the second embodiment is described below by referring to the flowchart of Fig. 5. The electronic control device 10 repeats a series of processes shown in Fig. 5 at predetermined intervals (at intervals of several tens of milliseconds, for example) while the engine operates. In this flowchart, the processes from S101 t S107 are the same as those from steps S1 to S7 of Fig. 2. Thus, the following description is mainly intended for a difference and overlapping description will not be given.

As shown in Fig. 5, if the addition valve opening permission flag Fv is set to ON to open the addition valve 6 in step S107, the procedure proceeds to step S108 to read the pressure P in the main passage 2 at the time. Next, the procedure proceeds to step S109 to calculate the left side of the expression (1). Next, the procedure proceeds to step S110 to determine whether the expression (1) is satisfied.

If the expression (1) is determined not to be satisfied in step S110 (step S110: NO), it is determined that air still remains in the main passage 2. In this case, the series of processes is temporarily suspended.

If the pump drive permission flag Fp is determined to be at ON in step S101 (step S101: NO) and if the addition valve opening permission flag Fv is determined to be at ON in step S106 (step S106: YES), the procedure proceeds to steps S108 and S109 to calculate the left side of the expression (1) again. Then, if the relationship shown in the expression (1) is determined to be established in step S110 (step S110: YES), the procedure proceeds to step S111 to set the addition valve opening permission flag Fv to OFF. As a result, the addition valve 6 is closed to finish the filling control, so that the series of processes is temporarily suspended.

The control device for an additive supply system of the present embodiment achieves the following advantage (4) in addition to the advantage (1) achieved by the first embodiment.

(4) When executing the filling control, the electronic control device 10 operates such that the lower the range within which the pressure P in the main passage 2 changes after the addition valve 6 is opened, the longer the period in which the pump 4 is driven to rotate forward with the addition valve 6 kept open. More specifically, the pump 4 is driven to rotate forward while the addition valve 6 is kept open until the relationship shown in the expression (1) is established. In this control, timing of finishing the filling control is set variably in response to how the pressure P in the main passage 2 actually changes. Thus, even if the pressure P in the main passage 2 changes within a lower pressure range than expected, this can prevent the filling control from being finished with part of air in the main passage 2 remaining without being pushed out. This reliably restrains air from remaining in the main passage after refilling of the additive.

The control device for an additive supply system of the present invention is not limited to the configurations shown as examples in the above illustrated embodiments. Where appropriate, the control device may be changed and implemented as follows, for example.

In each of the above illustrated embodiments, the addition valve 6 is kept closed until the period $\Delta$tp elapsed from when the filling control was started becomes longer than the predetermined period $\alpha$.

Air of a larger amount existing in the main passage 2 or the return passage 3 immediately after start of the filling control increases the pressure in the main passage 2 more slowly than air of a smaller amount, thereby delaying timing of opening the check valve 5. Thus, if the pressure in the main passage 2 increases at a lower speed than expected in the control of each of the above illustrated embodiments, where the predetermined period $\alpha$ in which the addition valve 6 should be kept closed is set in advance, the predetermined period $\alpha$ might elapse and the addition valve 6 might be opened while part of air in the main passage 2 remains without being pushed out.

In this regard, when the filling control is executed, the pump 4 may be driven to rotate forward while the addition valve 6 is kept closed for a predetermined period $\tau$ from when the pressure P in the main passage 2 became higher than or equal to the valve opening pressure of the check valve 5. In this case, the pressure P in the main passage 2 actually increases to the valve opening pressure of the check valve 5. Then, a period elapsed from when the check valve 5 is opened is controlled. Thus, the addition valve 6 is kept closed until air remaining in the return passage 3 is pushed out through the check valve 5. This reliably restrains air from remaining in the return passage 3 after refilling of the additive.

DESCRIPTION OF THE REFERENCE NUMERALS

| 1, 101 | Tank |
| 2, 102 | Main passage |
| 3, 103 | Return passage |
| 4, 104 | Pump |
| 5, 105 | Check valve |
| 6, 106 | Addition valve |
| 7 | Exhaust passage |
| 8 | Catalyst |
| 10 | Electronic control device |
| 11 | Pressure sensor |
| 12 | Temperature sensor |
| 13 | Ignition switch |

**Claims**

1. A control device for an additive supply system, wherein the additive supply system includes:

a tank (1) that stores an additive in a liquid form;

an addition valve (6) through which the additive in the tank (1) is supplied by injection to a catalyst (8) provided in an exhaust passage (7) of an internal combustion engine;

a main passage (2) through which the additive in the tank (1) is supplied to the addition valve (6);

a pump (4) provided in the main passage (2), wherein the pump (4) feeds the additive under pressure;

a return passage (3) branching off the main passage (2) to be connected to the tank (1); and

a check valve (5) provided in the return passage (3), wherein the check valve (5) prevents flow of the additive from the return passage (3) into the main passage (2), and the check valve (5) is opened if a pressure in the main passage (2) becomes higher than or equal to a predetermined valve opening pressure, wherein

the control device is configured to be capable of executing retrieval control of drawing the additive in the main passage (2) back into the tank (1) by rotating the pump (4) in reverse,

**characterized in that**,

when executing filling control of filling the main passage (2) with the additive after execution of the retrieval control, the control device rotates the pump (4) forward while keeping the addition valve (6) closed, and then opens the addition valve (6) and rotates the pump (4) forward, and

when the control device executes the filling control, the lower the range within which the pressure in the main passage (2) changes, the longer becomes the period in which the control device drives the pump (4) to rotate forward while the addition valve (6) is kept open after the pump (4) rotates forward while the addition valve (6) is kept closed.

2. The control device for an additive supply system according to claim 1, wherein

when executing the filling control, the control device drives the pump (4) to rotate forward while keeping the addition valve (6) closed for a predetermined period set in advance, and

the predetermined period is set to be longer than or equal to the shortest period required for filling of the return passage (3) with the additive to complete after the filling control is started.

3. The control device for an additive supply system according to claim 1 or 2, wherein, when executing the filling control, the control device drives the pump (4) to rotate forward while keeping the addition valve (6) open until a relationship represented by the following expression is established:

$$\frac{1}{\log(t)} \cdot \int_0^t P dt \ \geq \ \frac{1}{S} \cdot M \cdot Spd$$

where t represents the period elapsed after the addition valve (6) is opened, M represents the mass of the additive filling the entire main passage (2), S represents the cross-sectional area of the main passage (2), Spd represents the filling speed of the additive, and P represents the pressure in the main passage (2).

**Patentansprüche**

1. Steuervorrichtung für ein Additiv-Zuführsystem, wobei das Additiv-Zuführsystem beinhaltet:

einen Tank (1), der ein Additiv in einer flüssigen Form speichert;

ein Beigabeventil (6), durch das das Additiv in dem Tank (1) durch Einspritzung einem Katalysator (8) zugeführt wird, der sich in einem Abgastrakt (7) einer Verbrennungskraftmaschine befindet;

eine Hauptleitung (2), durch die das Additiv in dem Tank (1) dem Beigabeventil (6) zugeführt wird;

eine Pumpe (4), die sich in der Hauptleitung (2) befindet, wobei die Pumpe (4) das Additiv unter Druck zuführt;

eine Rückführleitung (3), die von der Hauptleitung (2) abzweigt, um mit dem Tank (1) verbunden zu werden; und

ein Rückschlagventil (5), das sich in der Rückführleitung (3) befindet, wobei das Rückschlagventil (5) ein Strömen des Additivs von der Rückführleitung (3) in die Hauptleitung (2) unterbindet, und wobei das Rückschlagventil (5) geöffnet wird, falls ein Druck in der Hauptleitung (2) gleich oder größer wird als ein vorgegebener Ventilöffnungsdruck, wobei

die Steuervorrichtung so konfiguriert ist, dass sie in der Lage ist, eine Wiedergewinnungssteuerung auszuführen, bei der das Additiv in der Hauptleitung (2) zurück in den Tank (1) gezogen wird, indem die Pumpe (4) rückwärts gedreht wird,

**dadurch gekennzeichnet, dass**,

wenn die Füllsteuerung ausgeführt wird, bei der die Hauptleitung (2) mit dem Additiv gefüllt wird, nachdem die Wiedergewinnungssteuerung ausgeführt wurde, die Steuervorrichtung die Pumpe (4) vorwärts dreht, während das Beigabeventil (6) geschlossen gehalten wird, und dann das Beigabeventil (6) öffnet und die Pumpe (4) vorwärts dreht, und,

wenn die Steuervorrichtung die Füllsteuerung ausführt, je niedriger die Spanne ist, innerhalb deren sich der Druck in der Hauptleitung (2) ändert, die Periode umso länger wird, in der die Steuervorrichtung die Pumpe (4) antreibt, damit sie sich vorwärts dreht, während das Beigabeventil (6) geöffnet gehalten wird, nachdem sich die Pumpe (4) vorwärts dreht, während das Beigabeventil (6) geschlossen gehalten wird.

2. Steuervorrichtung für ein Additiv-Zuführsystem nach Anspruch 1, wobei,

wenn die Füllsteuerung ausgeführt wird, die Steuervorrichtung die Pumpe (4) antreibt, damit sie sich vorwärts dreht, während das Beigabeventil (6) für eine im Voraus eingestellte vorgegebene Zeitspanne geschlossen gehalten wird, und

die vorgegebene Zeitspanne so eingestellt ist, dass sie gleich oder länger als die kürzeste Zeitspanne ist, die benötigt wird, um die Füllung der Rückführleitung (3) mit dem Additiv zu beenden, nachdem die Füllsteuerung gestartet wurde.

3. Steuervorrichtung für ein Additiv-Zuführsystem nach Anspruch 1 oder 2, wobei, wenn die Füllsteuerung ausgeführt wird, die Steuervorrichtung die Pumpe (4) antreibt, damit sie sich vorwärts dreht, während das Beigabeventil (6) geöffnet gehalten wird, bis ein Verhältnis erreicht ist, das durch die folgende Gleichung ausgedrückt wird:

$$\frac{1}{\log(t)} \cdot \int_0^t Pdt \ \geq \ \frac{1}{S} \cdot M \cdot Spd$$

wobei t die Zeitspanne darstellt, die verstrichen ist, nachdem das Beigabeventil (6) geöffnet wurde, M die Masse des Additivs darstellt, das die gesamte Hauptleitung (2) füllt, S die Querschnittsfläche der Hauptleitung (2) darstellt, Spd die Füllgeschwindigkeit des Additivs darstellt, und P den Druck in der Hauptleitung (2) darstellt.

## Revendications

1. Dispositif de commande pour système d'alimentation en additif, dans lequel le système d'alimentation en additif comprend :

un réservoir (1) qui stocke un additif sous une forme liquide ;
une soupape d'addition (6) à travers laquelle l'additif dans le réservoir (1) est amené par injection, à un catalyseur (8) prévu dans un passage d'échappement (7) d'un moteur à combustion interne ;
un passage principal (2) à travers lequel l'additif dans le réservoir (1) est amené à la soupape d'addition (6) ;
une pompe (4) prévue dans le passage principal (2), dans lequel la pompe (4) alimente l'additif sous pression ;
un passage de retour (3) s'écarte du passage principal (2) pour être raccordé au réservoir (1) ; et
une soupape de non-retour (5) prévue dans le passage de retour (3), dans laquelle la soupape de non-retour (5) empêche l'écoulement de l'additif du passage de retour (3) dans le passage principal (2), et la soupape de non-retour (5) est ouverte si une pression dans le passage principal (2) devient supérieure ou égale à une pression d'ouverture de soupape prédéterminée, dans lequel :

le dispositif de commande est configuré pour pouvoir exécuter la commande de récupération consistant à ramener l'additif dans le passage principal (2) dans le réservoir (1) en faisant tourner la pompe (4) en sens inverse,
**caractérisé en ce que** :

lors de l'exécution de la commande de remplissage consistant à remplir le passage principal (2) avec l'additif après l'exécution de la commande de récupération, le dispositif de commande fait tourner la pompe (4) vers l'avant tout en maintenant la soupape d'addition (6) ferme et ensuite ouvre la soupape d'addition (6) et fait tourner la pompe (4) vers l'avant, et
lorsque le dispositif de commande exécute la commande de remplissage, plus la plage dans laquelle la pression dans le passage principal (2) change est basse, plus la période pendant laquelle le dispositif de commande entraîne la pompe (4) pour la faire tourner vers l'avant est longue, alors que la soupape d'addition (6) est maintenue ouverte après que la pompe (4) a tourné vers l'avant alors que la soupape d'addition (6) est maintenue fermée.

**2.** Dispositif de commande pour un système d'alimentation en additif selon la revendication 1, dans lequel :

lors de l'exécution de la commande de remplissage, le dispositif de commande entraîne la pompe (4) pour qu'elle tourne vers l'avant tout en maintenant la soupape d'addition (6) fermée pendant une période prédéterminée, définie à l'avance, et
la période prédéterminée est définie pour être plus longue ou égale à la période la plus courte nécessaire pour le remplissage du passage de retour (3) avec l'additif pour compléter après le début de la commande de remplissage.

**3.** Dispositif de commande pour un système d'alimentation en additif selon la revendication 1 ou 2, dans lequel, lors de l'exécution de la commande de remplissage, le dispositif de commande entraîne la pompe (4) pour tourner vers l'avant tout en maintenant la soupape d'addition (6) ouverte jusqu'à ce qu'une relation représentée par l'expression suivante soit établie :

$$\frac{1}{\log(t)} \cdot \int_0^t P dt \geq \frac{1}{s} \cdot M \cdot Spd$$

où t représente la période qui s'est écoulée après l'ouverture de la soupape d'addition (6), M représente la masse de l'additif remplissant tout le passage principal (2), S représente la section transversale du passage principal (2), Spd représente la vitesse de remplissage de l'additif et P représente la pression dans le passage principal (2).

Fig.1

EP 2 905 441 B1

Fig.2

```
                              ┌─────────────────────┐
                              │   Filling Control   │
                              └─────────────────────┘
                                        │
                                        ▼                    S1
                          ╱─────────────────────────╲
              NO         ╱      Pump drive            ╲
        ◄────────────────      permission flag
                        ╲      Fp = OFF?             ╱
                         ╲─────────────────────────╱
                              S6             │ YES
        ╱───────────╲                        ▼                    S2
       ╱             ╲              ╱─────────────────────╲
       ╲  Fv = ON ?  ╱  NO         ╱  Filling control      ╲   NO
        ╲           ╱ ─────────►  ╱   permission flag        ╲ ────────┐
         ╲─────────╱              ╲   Ff = ON?              ╱          │
           │ YES                   ╲─────────────────────╱            │
           │                             │ YES                         │
           │                             ▼                             │
           │                   ┌─────────────────────┐                 │
           │                   │      Fp → ON         │ ~S3             │
           │                   └─────────────────────┘                 │
           │                             │                             │
           │                             ▼                             │
           │                   ┌─────────────────────┐                 │
           │                   │  Count up period    │                 │
           │                   │  ΔTp elapsed from when │ ~S4           │
           │                   │  filling control is started │         │
           │                   └─────────────────────┘                 │
           │                             │                             │
           │                             ▼              S5             │
           │                   ╱─────────────────────╲                 │
           │                  ╱  ΔTp > Predetermined    ╲   NO          │
           │                  ╲  period α?              ╱ ──────────────┤
           │                   ╲─────────────────────╱                 │
           │                             │ YES                         │
           │                             ▼                             │
           │                   ┌─────────────────────┐                 │
           │                   │ Set addition valve opening │ ~S7       │
           │                   │ permission flag Fv to ON │             │
           │                   └─────────────────────┘                 │
           │                             │                             │
           └─────────────────────────────┤                            │
                                          ▼                            │
                                ┌─────────────────────┐                │
                                │ Count up period ΔTv elapsed │ ~S8     │
                                │ from when addition valve is opened │   │
                                └─────────────────────┘                │
                                          │                            │
                                          ▼              S9             │
                                ╱─────────────────────╲                │
                               ╱  ΔTv > Reference       ╲   NO          │
                               ╲  period β?             ╱ ──────────────┤
                                ╲─────────────────────╱                │
                                          │ YES                        │
                                          ▼                            │
                                ┌─────────────────────┐                │
                                │      Fv → OFF        │ ~S10           │
                                └─────────────────────┘                │
                                          │                            │
                                          ▼◄───────────────────────────┘
                                ┌─────────────────────┐
                                │        End          │
                                └─────────────────────┘
```

EP 2 905 441 B1

**Fig.3A**

**Fig.3B**

14

## Fig.4A

## Fig.4B

## Fig.5

Fig.6A

Fig.6B

Fig.6C

**EP 2 905 441 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008101564 A
- DE 102010016654 A1